# EUROPEAN PATENT APPLICATION

(11) **EP 3 005 917 A1**
(43) Date of publication of application: **13.04.2016**
(21) Application number: 14808132.6
(22) Date of filing: 05.06.2014
(51) Int. Cl.: A47J 37/07, A47J 37/04

(54) **SMOKELESS BARBECUE DEVICE**

(30) Priority: 07.06.2013 AU 2013902075
(71) Applicant: James, Dale, Peter, Ningbo, Zhejiang 315800 (CN)
(72) Inventor: James, Dale, Peter, Ningbo, Zhejiang 315800 (CN)
(74) Representative: Wittmann, Günther
(86) International application number: PCT/CN2014/079212
(87) International publication number: WO 2014/194834

(57) **Abstract**

This invention discloses a smokeless barbecue device, comprises three layers arranged at different heights: a food placing layer that is used to fix food and can drive the food to rotate along a shaft; a heat source layer that is arranged below said food placing layer and can heat said food; an oil accommodating layer that is arranged below said heat source layer and can accommodate liquids fallen from the food placing layer; wherein, said heat source layer comprises several heat source sub-layers that are arranged at a same height and can be switched between a separated state and a gathered state; when in the separated state, said heat source sub-layers have gaps therebetween, so that oil drops produced on said food placing layer can pass through said gaps, and fall onto said oil accommodating layer; when in the gathered state, said heat source sub-layers are bonded with each other and thus have no gaps therebetween. Such device can prevent oil drops and fats from falling onto coals during heating the food, and thus can prevent generation of smoke dust, so that the safety in use is improved.

## Description

### Field of the Invention

This invention relates to a barbecue cooking apparatus. Specifically, the invention relates to a smokeless barbecue device that can prevent oil drops from falling onto coals during heating the food.

### Description of the Related Art

Barbecue cooking usually refers to a cooking method of fixing food on a food rack or a grill and arranging a heat source under a food accommodating device or the grill so as to roast. Such food cooking method of barbecue is a food cooking method that is popular since ancient times both in East and West.

Existing barbecue device has following defects:
1. The food is unequally heated, thus people needs to monitor and turn over the food.
2. During barbecue, oil of the food (especially food with high oil content) exudes so as to form oil drops that will directly fall onto a heating layer (usually, burning coals) under the food; it is easy to catch fire or generate dust, thus there is a potential safety hazard.

### Summary of the Invention

The problem sought to be solved by the invention is to provide a smokeless barbecue device. Such device can prevent oil drops and fats from falling onto coals during heating the food, and thus can prevent generation of smoke dust, so that the safety in use is improved. Meanwhile, structure design of the device of the present invention is ingenious and robust, and it is convenient to be stored.

Technical solution employed by the present invention to solve above technical problem is a smokeless barbecue device, comprising three layers arranged at different heights:
a food placing layer that is used to fix food and can drive the food to rotate around an axis;
a heat source layer that is arranged below said food placing layer and can heat said food;
an oil accommodating layer that is arranged below said heat source layer and can accommodate liquids fallen from the food placing layer;
wherein, said heat source layer comprises several heat source sub-layers that are arranged at a same height and can be switched between a separated state and a gathered state; when in the separated state, said heat source sub-layers have gaps therebetween, so that oil drops produced on said food placing layer can pass through said gaps, and fall onto said oil accommodating layer; when in the gathered state, said heat source sub-layers are bonded with each other and thus have no gaps therebetween;
a supporting frame that is arranged below said oil accommodating layer, for supporting said oil accommodating layer, and said supporting frame making said oil accommodating layer be vertically distant from the ground.

Said oil accommodating layer comprises a base and includes a first side cover and a second side cover standing at two ends of said base; a first slide bar is detachably fastened on said first side cover; a second slide bar is detachably fastened on said second side cover.

Said heat source layer and said food placing layer are detachably fastened at different heights via said first slide bar and second slide bar.

Said heat source layer comprises a first sliding shaft that is detachably fastened on said first slide bar, a second sliding shaft that is detachably fastened on said second slide bar, and roasting groove(s) that can horizontally move along said first sliding shaft or said second sliding shaft; each of two ends of each roasting groove is mounted with a sliding sleeve; said first sliding shaft or said second sliding shaft separately passes through said sliding sleeve on one end of each roasting groove.

Said food placing layer comprises a rotation shaft that is laterally arranged between said first slide bar and said second slide bar, and a motor for driving said rotation shaft to rotate.

Said food placing layer comprises a motor mounted on said first slide bar, a motor-mounting sheet iron for mounting said motor, and a rotation shaft that is driven by said motor and can rotate around an axis; said motor-mounting sheet iron is detachably fastened on said first slide bar; the top of said second slide bar is provided with a top slot hole; another end of said rotation shaft is accommodated in said top slot hole of said second slide bar.

In order to prevent the motor from being influenced by the high temperature during barbecue, said motor-mounting sheet iron bends towards the outside of the roasting groove so as to be prolonged by two winglike extended sheet irons, thus forming motor protection sheet irons.

In order to improve the smoothness and the robustness of said rotation shaft during the process of rotation, a shaft sleeve is provided between the second slide bar and the rotation shaft; and the top slot hole of said second slide bar is of a Y-shaped form that has symmetrical shoulders; after another end of said rotation shaft passes through said shaft sleeve, said shaft sleeve is laid on the shoulders of said top slot hole.

Said first slide bar and said first side cover are detachably fastened together; said second slide bar and said second side cover are also detachably fastened together. Said detachable mounting components also comprises butterfly screw and filler piece; said first side cover and said second side cover are both provided with screw hole; said first slide bar and said second slide bar are provided with elongated slot hole; the butterfly screw passes through the filler piece and the elongated slot hole and is embedded into the screw hole, in order to mount said first slide bar on said first side cover and mount said second slide bar on said second side cover.

The number of said roasting groove is two, and each of two ends of each roasting groove is provided with two sliding sleeves; also, a middle segment of said first sliding shaft or said second sliding shaft bends towards a direction that is away from the roasting groove so as to form a mounting segment used for mounting; said mounting segment is provided with screw hole, and is mounted on said first slide bar or said second slide bar via the butterfly screw and the filler piece; each side of the mounting segment of said first sliding shaft or said second sliding shaft passes through one roasting groove.

Said heat source layer uses burning coals to produce heat; and said burning coals are placed in said roasting groove.

In summary, the present invention has following beneficial effects:
(1) The present invention can prevent oil drops and fats from falling onto coals during heating the food, and thus can prevent generation of smoke dust, so that the safety in use is improved.
(2) Structure design of the device of the present invention is ingenious and robust, and it is convenient to be stored.

### Brief Description of the Drawings

Figure 1 is a structure diagram of Embodiment 1 of the present invention.
Figure 2 is a partial enlarged drawing of Figure 1.
Figure 3 is a structure diagram of a rotary table of embodiment 1.

Description of signs of the accompanying drawings: 1-base; 2-first side cover; 3-second side cover; 4-first slide bar; 5-second slide bar; 6-butterfly screw; 7-filler piece; 8-elongated slot hole; 9-first sliding shaft; 10-second sliding shaft; 11-roasting groove; 12-sliding sleeve; 13-mounting segment; 14-motor; 15-motor-mounting sheet iron; 16-rotation shaft; 17-top slot hole; 18-shaft sleeve; 19-motor protection sheet iron; 20- racket screw; 21-toasting fork; 22- ring shell; 23-spearing stick; 101-rotary table; 102-meat forking rod; 103-rod stand; 104-first breach; 105-position limiting piece; 106-second breach; 107- elastic clamping piece.

### Detailed Description OF the Preferred Embodiments

In the following, barbecue cooking components of specific embodiments of this invention are further described in connection of the figures. The following embodiments are used to make a person skilled in the art better understand the present invention rather than limit the scope of the present invention in any way.

### Embodiment 1

A smokeless barbecue device comprises three layers arranged at different heights:
a food placing layer that is used to fix food and can drive the food to rotate around an axis;
a heat source layer that is arranged below said food placing layer and can heat said food;
an oil accommodating layer that is arranged below said heat source layer and can accommodate liquids fallen from the food placing layer;
wherein, said heat source layer comprises several heat source sub-layers that are arranged at a same height and can be switched between a separated state and a gathered state; when in the separated state, said heat source sub-layers have gaps therebetween, so that oil drops produced on said food placing layer can pass through said gaps, and fall onto said oil accommodating layer; when in the gathered state, said heat source sub-layers are bonded with each other and thus have no gaps therebetween.

A supporting frame that is arranged below said oil accommodating layer, for supporting said oil accommodating layer, and said supporting frame making said oil accommodating layer be vertically distant from the ground.

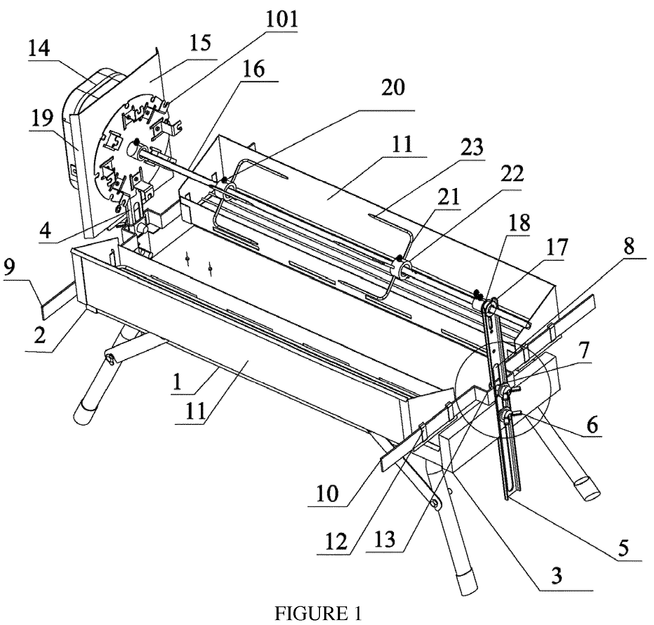

In this embodiment, as shown in Figure 1, said oil accommodating layer comprises s a base 1, as well as a first side cover 2 and a second side cover 3 standing at two ends of said base 1. Said base is a square plate with fringe, and fringes on two opposite ends are thickened, so as to form the first side cover 2 and the second side cover 3. A first slide bar 4 is detachably fastened on said first side cover 2; and a second slide bar 5 is detachably fastened on said second side cover 3. Specifically, the detachable mounting manner between said first side cover 2 and said first slide bar 4, as well as the detachable mounting manner between said second side cover 3 and said second slide bar 5, are both mounted by means of screws. Preferably, butterfly screw 6 and filler piece 7 are used to mount. That's to say, a central portion of said first side cover 2 is provided with a screw hole, and a central portion of said second side cover 3 is also provided with a screw hole; said first slide bar and said second slide bar are both provided with elongated slot hole 8. The butterfly screw passes through the filler piece and the elongated slot hole and is embedded into the screw hole of the first side cover, so as to mount said first slide bar 4 onto the first side cover 2. The butterfly screw passes through the filler piece and the elongated slot hole and is embedded into the screw hole of the second side cover, so as to mount the second slide bar 5 onto the second side cover 3.

Said heat source layer and said food placing layer are detachably fastened at different heights via said first slide bar 4 and second slide bar 5.

Specifically, said heat source layer comprises a first sliding shaft 9 that is detachably fastened on said first slide bar 4, and a second sliding shaft 10 that is detachably fastened on said second slide bar 5. Said first sliding shaft 9 and said second sliding shaft 10 are sliding shafts with exact the same shape and opposite arrangements. Two symmetric roasting grooves 11 are provided between said first sliding shaft 9 and said second sliding shaft 10, and burning coals for producing heat may be placed inside said roasting grooves 11. Two ends of each roasting groove are fixed with sliding sleeves 12. Sliding sleeve 12 may be welded into end face of the roasting grooves 11. Preferably, each end face of each roasting groove is arranged with two sliding sleeves 12.

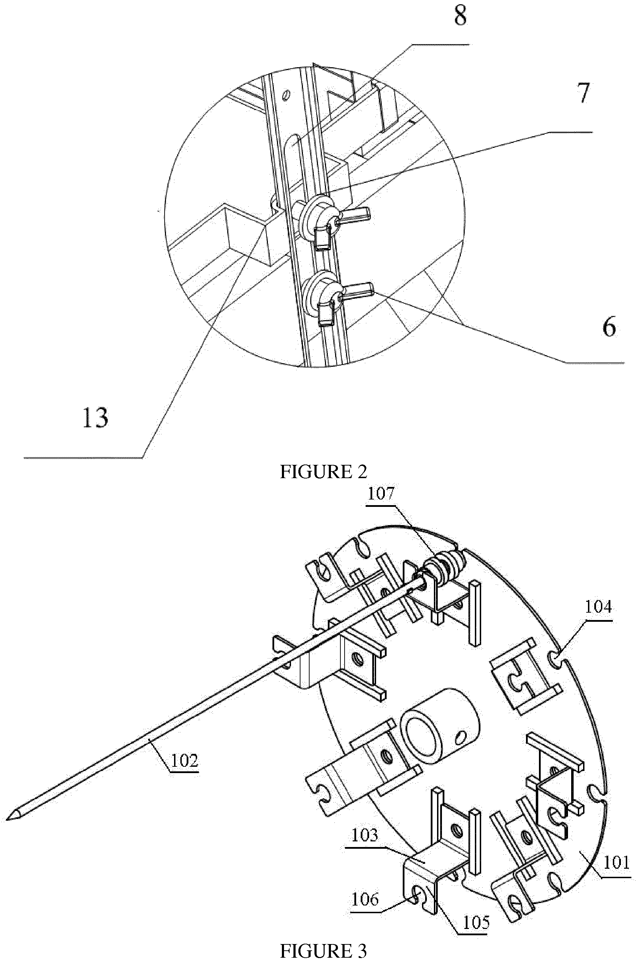

As shown in Figure 1 and Figure 2, a middle segment of the first sliding shaft 9 or the second sliding shaft 10 bends towards a direction that is away from the roasting groove 11 so as to form a mounting segment 13 for mounting. Said mounting segment 13 is provided with screw hole, and is mounted on said first slide bar 4 or said second slide bar 5 via butterfly screw and filler piece. The mounting segment 13 of said first sliding shaft 9 or said second sliding shaft 10 lies on a central region of the sliding shaft along the length direction; thus, two sides of the mounting segment 13 are symmetric. Each side of the mounting segment 13 passes through two sliding sleeves 12 of one roasting groove.

Therefore, in above embodiment, said roasting groove 11 can horizontally move along said first sliding shaft or said second sliding shaft. That's to say, such two roasting grooves 11 can be switched between a separated state or a gathered state. When said two roasting grooves 11 are in the separated state, said two roasting groove 11 have gaps therebetween, and oil drops generated on said food placing layer can pass through said gaps and fall onto said base 1; when said two roasting groove 11 are in the gathered state, said two roasting groove 11 are bonded with each other and thus have no gaps therebetween; and the storage of the device of the present invention is facilitated.

Said food placing layer comprises a motor 14 mounted on said first slide bar, a motor-mounting sheet iron 15 for mounting said motor, and a rotation shaft 16 that is driven by said motor 14 and can rotate around an axis. Said motor-mounting sheet iron 15 is detachably fastened on said first slide bar 4. The top of second slide bar 5 is provided with a top slot hole 17. One end of said rotation shaft 16, which is away from the motor 14, passes through the shaft sleeve 18, and said shaft sleeve 18 is accommodated in said top slot hole 17 of said second slide bar 5. Preferably, the top slot hole 17 of said second slide bar 5 is of a Y-shaped form that has symmetrical shoulders; said shaft sleeve 18 is laid on the shoulders of said top slot hole 17.

In order to protect the motor , said motor-mounting sheet iron bends towards the outside of the roasting groove so as to be prolonged by two winglike extended sheet irons, thus forming motor protection sheet irons 19.

As shown in Figure 1, a toasting fork 21 may also be mounted on the rotation shaft 16 via a racket screw 20; the toasting fork 21 comprises a ring shell 22 that may nested on rotation shaft 16 and a spearing stick 23 that extends a direction from the ring shell to the rotation shaft 16.

As shown in Figure 1, said food placing layer may also comprise a rotary table 101. The rotary table 101 is fixed onto rotation shaft 16 via screws. When the rotation shaft 16 rotates, the rotary table 101 is brought to rotate.

As shown in Figure 3, the rotary table 101 is provided with meat forking rods 102 for stringing up food. The rotary table 101 is provided with several rod stands 103; the edge of the disk surface of said rotary table 101 is provided with first breaches 104 corresponding to each rod stand 103; and one end of said rod stand 103 is securely connected to the disk surface, and another end extends towards the outside of the rotary table 101 so as to be prolonged by a position limiting piece 105 that is parallel to the disk surface; said position limiting piece 105 is provided with second breaches 106 that are arranged corresponding to said first breach 104; said meat forking rod comprises a meat forking rod body, and an elastic clamping piece 107 provided on one end of said meat forking rod body; said elastic clamping piece 107 is embedded between said first breach 104 and said second breach 106. The meat forking rod can be securely mounted on the rotary table by means of the fit between the elastic clamping piece with the first breach and the second breach.

As above, the present invention can be well implemented.

## Claims

1. A smokeless barbecue device, **characterized in that** it comprises three layers arranged at different heights:
a food placing layer that is used to fix food and can drive the food to rotate around an axis;
a heat source layer that is arranged below said food placing layer and can heat said food;
an oil accommodating layer that is arranged below said heat source layer and can accommodate liquids fallen from the food placing layer;
wherein, said heat source layer comprises several heat source sub-layers that are arranged at a same height and can be switched between a separated state and a gathered state; when in the separated state, said heat source sub-layers have gaps therebetween, so that oil drops produced on said food placing layer can pass through said gaps, and fall onto said oil accommodating layer; when in the gathered state, said heat source sub-layers are bonded with each other and thus have no gaps therebetween;
a supporting frame that is arranged below said oil accommodating layer, for supporting said oil accommodating layer, and said supporting frame making said oil accommodating layer be vertically distant from the ground.

2. The smokeless barbecue device according to claim 1, **characterized in that**, said oil accommodating layer comprises a base and includes a first side cover and a second side cover standing at two ends of said base; a first slide bar is detachably fastened on said first side cover; a second slide bar is detachably fastened on said second side cover;
said heat source layer and said food placing layer are detachably fastened at different heights via said first slide bar and second slide bar.

3. The smokeless barbecue device according to claim 2, **characterized in that**, said heat source layer comprises a first sliding shaft that is detachably fastened on said first slide bar, a second sliding shaft that is detachably fastened on said second slide bar, and roasting groove(s) that can horizontally move along said first sliding shaft or said second sliding shaft; each of two ends of each roasting groove is mounted with a sliding sleeve; said first sliding shaft or said second sliding shaft separately passes through said sliding sleeve on one end of each roasting groove.

4. The smokeless barbecue device according to claim 3, **characterized in that**, said food placing layer comprises a rotation shaft that is laterally arranged between said first slide bar and said second slide bar, and a motor for driving said rotation shaft to rotate.

5. The smokeless barbecue device according to claim 3, **characterized in that**, said food placing layer comprises a motor mounted on said first slide bar, a motor-mounting sheet iron for mounting said motor, and a rotation shaft that is driven by said motor and can rotate around an axis; said motor-mounting sheet iron is detachably fastened on said first slide bar; the top of said second slide bar is provided with a top slot hole; another end of said rotation shaft is accommodated in said top slot hole of said second slide bar.

6. The smokeless barbecue device according to claim 5, **characterized in that**, said motor-mounting sheet iron bends towards the outside of the roasting groove so as to be prolonged by two winglike extended sheet irons, thus forming motor protection sheet irons.

7. The smokeless barbecue device according to claim 6, **characterized in that** it also comprises a shaft sleeve; the top slot hole of said second slide bar is of a Y-shaped form that has symmetrical shoulders; after another end of said rotation shaft passes through said shaft sleeve, said shaft sleeve is laid on the shoulders of said top slot hole.

8. The smokeless barbecue device according to claim 7, **characterized in that** it also comprises butterfly screw and filler piece; said first side cover and said second side cover are both provided with screw hole; said first slide bar and said second slide bar are provided with elongated slot hole; the butterfly screw passes through the filler piece and the elongated slot hole and is embedded into the screw hole, in order to mount said first slide bar on said first side cover and mount said second slide bar on said second side cover.

9. The smokeless barbecue device according to claim 8, **characterized in that**, the number of said roasting groove is two, and each of two ends of each roasting groove is provided with two sliding sleeves; also, a middle segment of said first sliding shaft or said second sliding shaft bends towards a direction that is away from the roasting groove so as to form a mounting segment used for mounting; said mounting segment is provided with screw hole, and is mounted on said first slide bar or said second slide bar via the butterfly screw and the filler piece; each side of the mounting segment of said first sliding shaft or said second sliding shaft passes through one roasting groove.

10. The smokeless barbecue device according to any one of claims 3-9, **characterized in that**, said heat source layer employs burning coals to produce heat; said burning coals are accommodated in said roasting groove.
